# EUROPEAN PATENT SPECIFICATION

(11) **EP 3 052 999 B1**
(45) Date of publication and mention of the grant of the patent: **28.06.2017**
(21) Application number: 14777585.2
(22) Date of filing: 29.09.2014
(51) Int. Cl.: G05B 23/02, G01B 7/31

(54) **METHOD AND SYSTEM FOR MONITORING THE OPERATION OF A FLEXIBLE COUPLING DEVICE**
VERFAHREN UND SYSTEM ZUR ÜBERWACHUNG DES BETRIEBS EINER FLEXIBLEN KUPPLUNGSVORRICHTUNG
PROCÉDÉ ET SYSTÈME DE SURVEILLANCE DU FONCTIONNEMENT D'UN DISPOSITIF SOUPLE D'ACCOUPLEMENT

(30) Priority: 02.10.2013 IT CO20130043
(43) Date of publication of application: 10.08.2016
(73) Proprietor: Nuovo Pignone S.r.l., 50127 Florence (IT)
(72) Inventor: CAMATTI, Massimo, I-51027 Pistoia PT (IT); MOCHI, Gianni, I-50127 Firenze FI (IT); TRALLORI, Paolo, I-50127 Firenze FI (IT); PENNESI, Simone, I-50127 Firenze FI (IT); PAOLANTI, Roberto, I-50127 Firenze FI (IT)
(74) Representative: Illingworth-Law, William Illingworth
(86) International application number: PCT/EP2014/070812
(87) International publication number: WO 2015/049208

(56) References cited:
- WO-A1-2013/014198
- WO-A1-2013/127958
- US-A1- 2004 024 499
- US-A1- 2009 055 129

## Description

### TECHNICAL FIELD

Embodiments of the subject matter disclosed herein generally relate to methods and systems for monitoring the operation of a flexible coupling device.

These methods and systems have been conceived and are particularly useful in the field of "Oil & Gas".

### BACKGROUND ART

US 2009/0055129 A1 discloses an aircraft propulsion system monitoring device.

Flexible coupling devices are known and used for transmitting rotation from a first shaft, a so-called "drive shaft", to a second shaft, a so-called "driven shaft", and allow for accommodating misalignments between the shafts; typically, there are slight angular misalignments, but slight axial and/or radial misalignments may be possible; misalignments may also slightly vary in time. The drive shaft belongs to a machine generating "mechanical energy" and the driven shaft belongs to a machine using "mechanical energy" for doing "mechanical work". Such transmission of rotation implies also the transmission of torque.

Examples of such flexible coupling devices are described and shown, for example, in US patent n° 4,569,667 that is rather old and in US patent n° 6,508,714 that is rather recent.

The flexible coupling device, as well the shafts and the connections between the device and the shafts, are designed and sized based on its operating conditions; these include, in particular, the torque to be transmitted at e.g. a certain speed (for example, the minimum, average and maximum operating torque), the possible misalignments and the vibrations.

It may happen that the flexible coupling device, as well the shafts and the connections between the device and the shafts, operate out of their normal operating conditions and/or close to the limits of their normal operating conditions. This is caused by unexpected and rare events, for example a sudden and large increase in the resistive torque exerted on the driven shaft of a compressor of an LNG [= Liquefied Natural Gas] plant due to some liquid entering the inlet of the compressor instead of pure gas.

Usually, both the device and the connections between the device and the shafts can withstand such anomalous operating conditions especially if they occur only once.

Anyway, such anomalous operating conditions may cause damages to or destruction of the device and/or the connections between the device and the shafts especially if they repeat more than once, and, as a consequence, there may be damages to e.g. the drive machine and/or the driven machine. It is worth considering that even if the drive machine and the driven machine are not damaged, repairing or replacing the flexible coupling device requires unplanned, unpredictable and long downtime of the plant which may have an enormous cost for an Oil & Gas plant.

It would be possible to design and size the flexible coupling device considering these unexpected and rare events. Anyway, this would lead to a much more expensive, complex and bulky device and such device would be fully exploited only during time periods very short if compared with the overall operating time.

### SUMMARY

Therefore, there is a general need for solutions able to take into account anomalous operating conditions, in particular torque peaks.

The present invention is defined in the accompanying claims.

As repairing or replacing the flexible coupling device should be possible and relatively simple, it is advantageous to realize the connections between the flexible coupling device and the shafts (at least one, but typically both) by shrink fit because such kind of connection can be easily established and disestablished and is simple and effective. In this case, anomalous operating conditions may cause slipping between the device and the shafts and, as a consequence, damages to the connections.

Such general need is particularly felt in the field of Oil & Gas, more particularly for LNG plants.

By monitoring the rotation of the flexible coupling device and its connections, it is possible to estimate if a small or big damage to the device or its connections has occurred or is approaching and therefore if a maintenance action is useful or necessary.

A first aspect of the present invention is a method of monitoring the operation of a flexible coupling device.

According to embodiments thereof, a method of monitoring the operation of a flexible coupling device, wherein the flexible coupling device comprises on a first side a first hub and on a second side a second hub, comprises the steps of :
connecting the first hub to a first stub of a first shaft,
connecting the second hub to a second stub of a second shaft,
detecting the relative rotation angle between at least two components selected between the first hub, the second hub, the first stub, the second stub.

A second aspect of the present invention is a system for monitoring the operation of a flexible coupling device.

According to embodiments thereof, a system for monitoring the operation of a flexible coupling device, wherein at a first side a first hub of the device is connected to a first stub of a first shaft and at a second side a second hub of the device is connected to a second stub of a second shaft, comprises:
one or more detectors arranged to detect the relative rotation angle between at least two components selected between the first hub, the second hub, the first stub, the second stub,
and
an electronic processing unit connected to said one or more detectors for receiving signals generated by said detectors.

A third aspect of the present invention is a plant, in particular an Oil & Gas plant.

According to embodiments thereof, a plant comprises a first rotary machine, a second rotary machine, and a flexible coupling device for transmitting rotation from a first shaft of the first rotary machine to a second shaft of the second rotary machine; the plant comprises further a system for monitoring the operation of the flexible coupling device.

### BRIEF DESCRIPTION OF DRAWINGS

The accompanying drawings, which are incorporated herein and constitute a part of the specification, illustrate exemplary embodiments of the present invention and, together with the detailed description, explain these embodiments. In the drawings:
Fig. 1 shows schematically a flexible coupling device coupling a drive machine and a driven machine in a LNG plant,
Fig. 2 shows a flowchart of a monitoring method applied to the monitoring system in Fig.1,
Fig. 3 shows exemplary time diagrams of three relative rotation angles and three angle variation rates in the embodiment of Fig.1,
and
Fig. 4 shows a flexible coupling device connected to two shafts of a monitoring system,

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

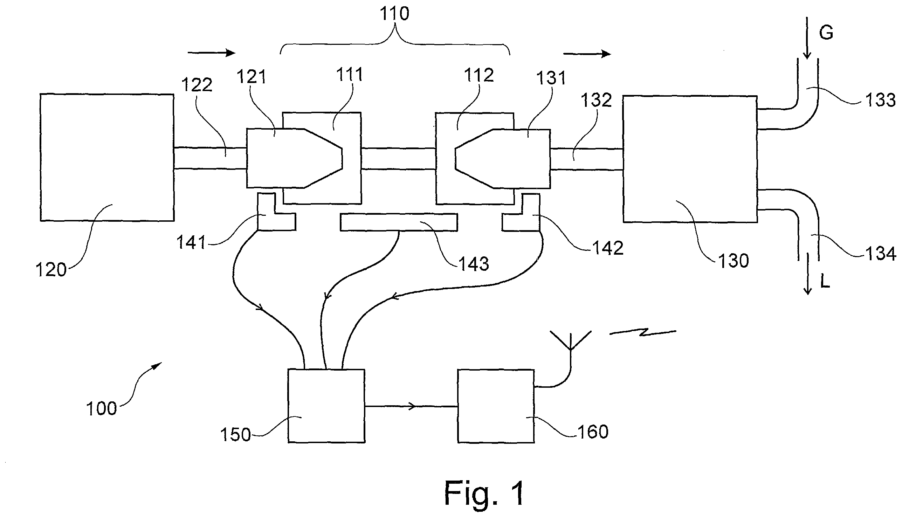

Fig.1 shows in a very schematic and simplified way a LNG plant 100. There is a flexible coupling device 110 that couples a first rotary machine 120, that acts as a "drive machine" and a second rotary machine 130, that acts as a driven machine; specifically, machine 130 is a compressor having a inlet 133 for gaseous natural gas and an outlet 134 for liquefied natural gas. The machine 120 has a rotating shaft 122, i.e. a "drive shaft", ending with a stub 121. The machine 130 has a rotating shaft 132, i.e. a "driven shaft", ending with a stub 131. The flexible coupling device 110 has on a first side a first hub 111 and on a second side a second hub 112. Furthermore, there is an electronic processing unit 150 and an electronic transmission unit 160 electrically connected to the unit 150; although the unit 160 is shown as having an antenna, the transmission capabilities the electronic transmission unit are not restricted to this possibility. The unit 150 is electrically connected to relative rotation angle detectors 141, 142 and 143. It is to be noted that although a stub is usually a convex element and a hub is usually a concave element, as shown in Fig.1, the present invention does not exclude the opposite possibility.

The hub 111 is connected to the stub 121 and the hub 112 is connected to the stub 131. Both these connections are intended for normal operation "without slipping" between hub and stub, i.e. so that hub and stub rotate integrally; therefore, under normal operating conditions, when the shaft 122 of the machine 120 rotates at a certain speed, also the device 110 and the shaft 132 of the machine 130 rotate at the same speed. It is advantageous (and therefore typical according to the present invention) to realize these connections between the hubs of the flexible coupling device and the stubs of the shafts (at least one, but typically both) by shrink fit because such kind of connection can be easily established and disestablished and is simple and effective.

Once these preliminary steps have been carried out, the electric or electronic monitoring of the flexible coupling device 110 may start. In general, it is necessary to detect the relative rotation angle between at least two components selected between the hub 111, the hub 112, the stub 121, the stub 131.

Monitoring the rotation angle between the hub 111 and the stub 121 is useful for determining any damage or risk of damage to the connection between the flexible coupling device 110 and the shaft 122; in case of a shrink fit connection, a change in this angle means a slipping, which is undesired, between the hub and the stub.

Monitoring the rotation angle between the hub 112 and the stub 131 is useful for determining any damage or risk of damage to the connection between the flexible coupling device 110 and the shaft 132; in case of a shrink fit connection, a change in this angle means a slipping, which is undesired, between the hub and the stub.

Monitoring the rotation angle between the hub 111 and the hub 112 is useful for determining any damage or risk of damage to the flexible coupling device, in particular its flexible element or elements.

By monitoring these three rotation angles, damages and risks of damages are under good and specific control.

Alternatively a good, but general control may be achieved by monitoring only the rotation angle between the stub 121 and the stub 131; in fact, a change in this angle may mean a damage or risk of damage to the first connection or the second connection or the device.

Fig. 1 shows three "relative rotation angle detectors". It is to be noted such a detector may be, for example, a single component that provides at its output an electric signal corresponding to the size of the angle between two rotating mechanical components. Alternatively, detection of a relative rotation angle may be obtained, for example, by detecting the absolute rotations of the two rotating mechanical components (with respect to e.g. ground or frame of a rotary machine) and by processing, specifically by subtracting, the two detected rotations; the relative rotation and the angle are linked to each other.

An advantageous way of detecting rotations for the purpose of monitoring the operation of a flexible coupling device is by means of eddy current detectors; in fact, this kind of detectors and its processing equipment are often already part of an Oil & Gas plant for monitoring vibrations of its machines.

When the monitoring of the flexible coupling device is carried out by a computerized system, as in the embodiment of Fig.1, the value of one or more relative rotation angles (three angles in the embodiment of Fig.1) may be repeatedly (e.g. periodically) determined; additionally or alternatively, the variation rate of the value of one or more relative rotation angles (three angles in the embodiment of Fix.1) may be repeatedly (e.g. periodically) determined; advantageously, both determinations are made. Both determinations require some processing of the electric signals generated by the detectors; in the embodiment of Fig.1, such processing is carried out by unit 150.

The determined angle and/or variation values are typically stored locally at least for a short time; this is carried out by unit 150 in the embodiment of Fig.1. The determined angle and/or variation values may be stored locally for a long time; this may be carried out by unit 150 in the embodiment of Fig.1 (so-called "data logger" function).

When monitoring one or more flexible coupling devices it is useful also to carry out some signaling; it is possible to signal the value of one or more angles and/or to signal the variation rate of such value and/or to signal dangerous conditions or the approach to dangerous conditions of the flexible coupling device.

Signaling may be local, for example through a display and/or a loudspeaker of a control panel located in the plant, and/or remote, for example through a display and/or a loudspeaker of a control computer located far from the plant. In the embodiment of Fig.1, unit 160 is used for transmitting signaling information to a remote computer. Local signaling may be different from remote signaling; for example, the value and the rate may be signaled locally only while dangerous conditions may be signaled both locally and remotely.

Signaling may be carried out continuously or only according to certain criterion or criteria; this typically applies to the signaling of the value of one or more angles and/or to the signaling of the variation rate of such value. A criterion may correspond, for example, to the value of a certain angle exceeding a predetermined angle level, or to the variation rate of the value of a certain angle exceeding a predetermined rate level. A more complex criterion may correspond, for example, to the value of a certain angle exceeding a predetermined angle level for a predetermined time period, or to the variation rate of the value of a certain angle exceeding a predetermined rate level for a predetermined time period.

Signaling of a dangerous condition or of the approach to a dangerous condition of the flexible coupling device is carried out according to a certain criterion; such criterion is typically related to the value of one or more angles and/or to variation rate of such value.

It appears that, in general, signaling requires some processing and, in the embodiment of Fig.1, such processing is carried out by unit 150.

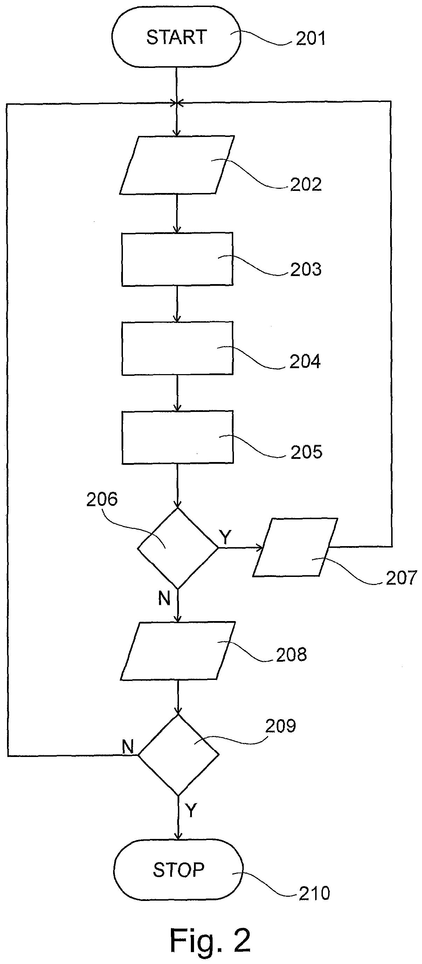

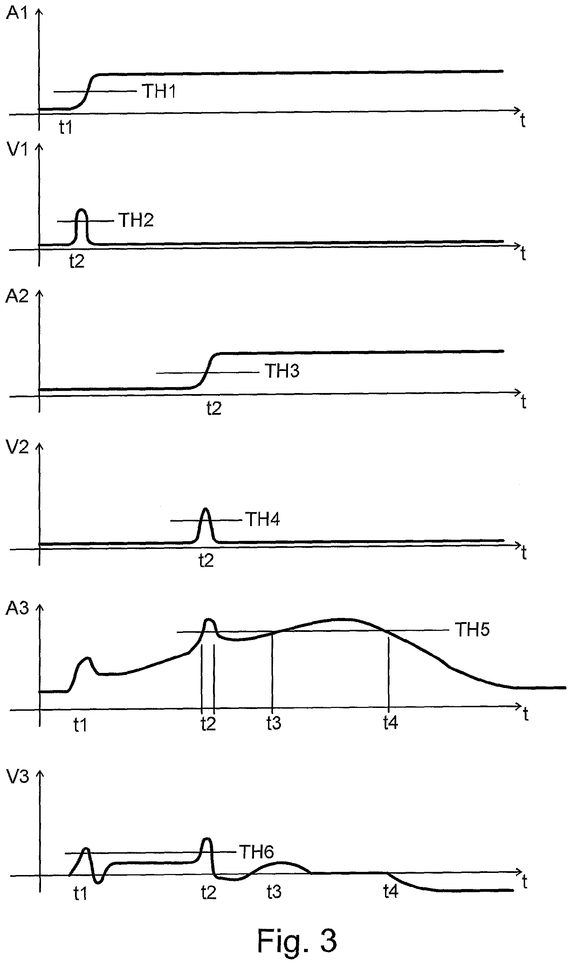

Considering now Fig.2 and Fig.3 in conjunction with Fig.1, a monitoring activity may be described as carried out by the electronic processing unit 150.

Assuming that the flexible coupling device 110 is already mounted, i.e. that its hub 111 is connected to the stub 121 of the shaft 122 (i.e. the drive shaft) and that its hub 112 is connected to the stub 131 of the shaft 132 (i.e. the driven shaft), the monitoring activity may start, see box 201.

At box 202, the electric signals from detectors 141, 142, 143 are sampled by unit 150.

At box 203, the values of the relative rotation angle respectively between hub 111 and stub 121, between hub 112 and stub 131, between hub 111 and hub 112 are determined by unit 150 and stored into a memory internal to unit 150.

At box 204, the variation rates of the values of the relative rotation angle respectively between hub 111 and stub 121, between hub 112 and stub 131, between hub 111 and hub 112 are determined by unit 150 and stored into a memory internal to unit 150.

Fig.3 shows exemplary time diagrams of the relative rotation angles between hub 111 and stub 121 as diagram A1, between hub 112 and stub 131 as diagram A2, between hub 111 and hub 112 as diagram A3; furthermore, Fig.3 shows exemplary time diagrams of the variation rates of the relative rotation angle between hub 111 and stub 121 as diagram V1, between hub 112 and stub 131 as diagram V2, between hub 111 and hub 112 as diagram V3.

At box 205, the unit 150 carries out some processing useful for judging one or more signaling criteria.

At box 206, the unit 150 judges the one or more signaling criteria.

Diagrams A1 and V1 show that the corresponding angle exceeded a threshold TH1 at time t1 and, more importantly, that, at the same time t1, its variation rate exceeded a threshold TH2; this means that a sudden slipping occurred at the connection between 111 and 121.

Diagrams A2 and V2 show that the corresponding angle exceeded a threshold TH3 at time t2 and, more importantly, that, at the same time t2, its variation rate exceeded a threshold TH4; this means that a sudden slipping occurred at the connection between 112 and 131.

Diagrams A3 and V3 show that, at times t1 and t2, the corresponding angle had a variation with a variation rate exceeding a threshold TH6; this means that a sudden torsion occurred inside the flexible coupling device 110 which might correspond to a damage of an internal flexible element.

Furthermore, diagram A3 shows that the corresponding angle exceeded a threshold TH5 for a short time period at time t2 and for a long time period between time t3 and time t4; this means that the flexible coupling device 110 was subject to high torque for a certain amount of time which might lead to damage of an internal flexible element.

If the judging at box 206 is positive (see arrow marked "Y"), i.e. one or more signaling criteria are met, some signaling is carried out at box 207 and then the flow goes back to the box 202. Such signaling typically depends on the result of the judging.

If the judging at box 206 is negative (see arrow marked "N"), i.e. none of the signaling criteria are met, input from the operator is detected at box 208 relating to the stop of the monitoring activity.

At box 209, such input from the operator is judged.

If unit 150 judges that the operator wishes to stop monitoring (see arrow marked "Y"), the flow goes to the stop box 210.

If unit 150 judges that the operator does not wish to stop monitoring (see arrow marked "N"), the flow goes back to the box 202.

The system for monitoring the operation of a flexible coupling device according to the present invention essentially comprises one or more detectors arranged to detect the relative rotation angle between at least two components, and an electronic processing unit connected to the one or more detectors for receiving signals generated by the detectors; in the embodiment of Fig.1, the detectors are labeled 141, 142, 143 and the electronic processing unit is labeled 150.

Typically, the monitoring system comprises also an electronic transmission unit (labeled 160 in the embodiment of Fig.1) connected to the electronic processing unit and arranged to transmit to a remote computer one or more of the following:
data stored by the electronic processing unit based on signals from the detectors,
data processed by the electronic processing unit based on signals from the detectors,
data compared by the electronic processing unit based on signals from the detectors,
information generated by the electronic processing unit corresponding to dangerous conditions or approach to dangerous conditions.

The monitoring activity is primarily carried out by the electronic processing unit using the detectors and, if remote signaling is desired (for example for dangerous conditions or the approach to dangerous conditions), the electronic transmission unit.

Such system is useful and advantageous in a plant, in particular an Oil & Gas plant.

In this case, it is associated to a flexible coupling device coupling a drive machine to a driven machine, for example a compressor for generating liquefied natural gas.

Such system may be integrated into an already existing monitoring system of a plant, for example a system for monitoring the vibrations of the machines of a plant; this might require some (typically few) additional detectors and some additional software.

The same system may be associated to a plurality of flexible coupling devices of a plant.

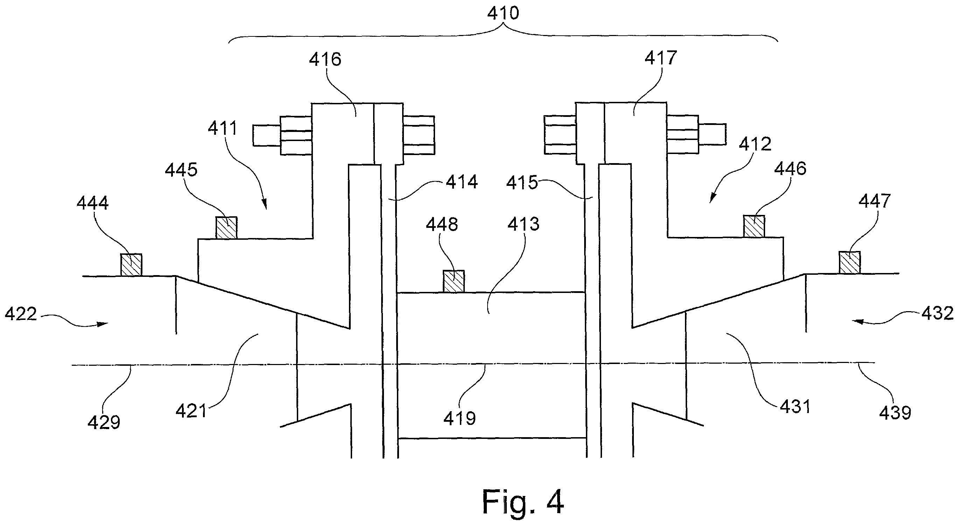

Fig.4 is a more detailed drawing of a specific and advantageous embodiment.

The flexible coupling device is labeled 410, the drive shaft is labeled 422 and has a conical stub 421, the driven shaft is labeled 432 and has a conical stub 431.

The device 410 comprises three basic components jointed together by nuts and bolts:
a single-piece first end hub 411 comprising a body with a conical through hole (to mate with the stub 421) and a flange 416,
a single-piece second end hub 412 comprising a body with a conical through hole (to mate with the stub 431) and a flange 417, and
an intermediate spool-type component.

The spool-type component comprises:
a tube or cylinder 413 that is shown in Fig.4 as rigid and single-piece (alternatively could be elastic and/or split axially into two or more pieces),
a first disc 414 (usually called "diaphragm") that is elastic and that is fixed to the tube or cylinder 413,
a second disc 415 (usually called "diaphragm") that is elastic and that is fixed to the tube or cylinder 413.

The disc 414 and the flange 416 are fixed to each other, at their outer periphery, by nuts and bolts.

The disc 415 and the flange 417 are fixed to each other, at their outer periphery, by nuts and bolts.

In the embodiment of Fig.4, five rotation detectors are used and labeled respectively 444,445,446,447,448.

The detector 444 is associated to the shaft 422.

The detector 445 is associated to the body of the hub 411.

The detector 446 is associated to the body of the hub 412.

The detector 447 is associated to the shaft 432.

The detector 448 is associated to the tube or cylinder 413.

In this way, any possibly useful relative rotation angle of the flexible coupling device 410 may be detected.

In Fig.4, the axis 419 of the device 410, the axis 429 of the shaft 422, the axis 439 of the shaft 432 are shown just to highlight that there might be slight misalignments between than at assembly and/or during normal operation.

## Claims

1. A method of monitoring the operation of a system (100) comprising a first rotary machine (120), a second rotary machine (130), and a flexible coupling device (110) for transmitting rotation from a first shaft (122) of the first rotary machine (120) to a second shaft (132) of the second rotary machine (130), wherein the flexible coupling device (110) comprises on a first side a first hub (111) and on a second side a second hub (112), the method comprising the steps of:
a) connecting the first hub (111) to a first stub (121) of a first shaft (122),
b) connecting the second hub (112) to a second stub (131) of a second shaft (132),
c) detecting the rotation angle between at least two components selected between the first hub (111), the second hub (112), the first stub (121), the second stub (131), and **characterised in**
d) monitoring the system (100) to determine when the rotation angle exceeds a threshold corresponding to a slippage between at least two components selected between the first hub (111), the second hub (112), the first stub (121) and the second stub (131).

2. The method of claim 1, wherein detecting the relative rotation angle in step C comprises detecting rotation of said at least two components.

3. The method of claim 1 or claim 2, wherein detecting the rotation angle in step c) comprises determining the value and/or the variation rate of the value of the relative rotation angle between said at least two components.

4. The method of claim 3, comprising further the step of signaling the value and/or the variation rate of the value when the value or the variation rate of the value exceeds a predetermined level.

5. The method of claim 3, comprising further the step of signaling the value and/or the variation rate of the value when the value or the variation rate of the value exceeds a predetermined level for a predetermined time period.

6. The method of any of claims 3 to 5, comprising further the step of repeatedly storing the value and/or the variation rate of the value.

7. The method of any preceding claim, comprising further the step of signaling dangerous conditions or the approach to dangerous conditions.

8. A system for monitoring the operation of a flexible coupling device (110), wherein at a first side a first hub (111) of the device is connected to a first stub (121) of a first shaft (122) and at a second side a second hub (112) of the device is connected to a second stub (131) of a second shaft (132), the system comprising:
one or more detectors (141, 142, 143) arranged to detect the rotation angle between at least two components selected between the first hub (111), the second hub (112), the first stub (121), the second stub (131), and
an electronic processing unit (150) connected to said one or more detectors (141, 142, 143) for receiving signals generated by said detectors (141, 142, 143) to detect when the rotation angle exceeds a threshold corresponding to a slippage between at least two components selected between the first hub (111), the second hub (112), the first stub (121) and the second stub (131).

9. The system of claim 8, wherein at least one of said one or more detectors is arranged to detect an absolute rotation.

10. The system of claim 8, wherein at least one of said one or more detectors is arranged to detect a relative rotation.

11. The system of any of claims 8 to 10, wherein at least one of said detectors is an eddy currents rotation detector.

12. The system of any of claims 8 to 11, comprising further an electronic transmission unit (160) connected to said electronic processing unit (150) and arranged to transmit to a remote computer one or more of the following:
data stored by said electronic processing unit (150) based on said received signals,
data processed by said electronic processing unit (150) based on said received signals,
data compared by said electronic processing unit (150) based on said received signals,
information generated by said electronic processing unit (150) corresponding to dangerous conditions or approach to dangerous conditions.

13. The system of any of claims from 8 to 12, being arranged for carrying out the method according to any of claims from 1 to 7.

14. A plant (100) including a system of any of claims 8 to 13, wherein said system is arranged to signal dangerous conditions or the approach to dangerous conditions.

## Patentansprüche

1. Verfahren zum Überwachen des Betriebs eines Systems (100), das eine erste Rotationsmaschine (120), eine zweite Rotationsmaschine (130) und eine flexible Kopplungseinrichtung (110) zum Übertragen der Rotation von einer ersten Welle (122) der ersten Rotationsmaschine (120) auf eine zweite Welle (132) der zweiten Rotationsmaschine (130) aufweist, wobei die flexible Kopplungseinrichtung (110) auf einer ersten Seite eine erste Nabe (111) und auf einer zweiten Seite eine zweite Nabe (112) aufweist, wobei das Verfahren die folgenden Schritte umfasst:
a) Verbinden der ersten Nabe (111) mit einem ersten Stumpf (121) einer ersten Welle (122),
b) Verbinden der zweiten Nabe (112) mit einem zweiten Stumpf (131) einer zweite Welle (132),
c) Erfassen des Drehwinkels zwischen mindestens zwei Komponenten ausgewählt aus der ersten Nabe (111), der zweiten Nabe (112), dem ersten Stumpf (121), dem zweiten Stumpf (131), und
**gekennzeichnet durch**
d) Überwachen des Systems (100), um festzustellen, wenn der Drehwinkel eine Schwelle entsprechend einem Schlupf zwischen mindestens zwei Komponenten ausgewählt aus der ersten Nabe (111), der zweiten Nabe (112), dem ersten Stumpf (121) und dem zweiten Stumpf (131) überschreitet.

2. Verfahren nach Anspruch 1, wobei das Erfassen des relativen Drehwinkels in Schritt C das Erfassen der Rotation der mindestens zwei Komponenten umfasst.

3. Verfahren nach Anspruch 1 oder Anspruch 2, wobei das Erfassen des Drehwinkels in Schritt c) das Bestimmen des Werts und/oder der Veränderungsrate des Werts des relativen Drehwinkels zwischen den mindestens zwei Komponenten umfasst.

4. Verfahren nach Anspruch 3, welches ferner den Schritt des Signalisierens des Werts und/oder der Veränderungsrate des Werts umfasst, wenn der Wert oder die Veränderungsrate des Werts einen vorab bestimmten Betrag überschreitet.

5. Verfahren nach Anspruch 3, welches ferner den Schritt des Signalisierens des Werts und/oder der Veränderungsrate des Werts umfasst, wenn der Wert oder die Veränderungsrate des Werts einen vorab bestimmten Betrag über einen vorab bestimmten Zeitraum überschreitet.

6. Verfahren nach einem der Ansprüche 3 bis 5, welches ferner den Schritt des wiederholten Speicherns des Werts und/oder der Veränderungsrate des Werts umfasst.

7. Verfahren nach einem vorhergehenden Anspruch, welches ferner den Schritt des Signalisierens von gefährlichen Zuständen oder der Annäherung an gefährliche Zustände umfasst.

8. System zum Überwachen des Betriebs einer flexiblen Kopplungseinrichtung (110), wobei auf einer ersten Seite eine erste Nabe (111) der Vorrichtung mit einem ersten Stumpf (121) einer ersten Welle (122) verbunden ist, und auf einer zweiten Seite eine zweite Nabe (112) der Vorrichtung mit einem zweiten Stumpf (131) einer zweiten Welle (132) verbunden ist, wobei das System Folgendes aufweist:
einen oder mehrere Detektoren (141, 142, 143), die ausgebildet sind, den Drehwinkel zwischen mindestens zwei Komponenten ausgewählt aus der ersten Nabe (111), der zweiten Nabe (112), dem ersten Stumpf (121) und dem zweiten Stumpf (131) zu erfassen, und
eine elektronische Verarbeitungseinheit (150), die mit dem einen oder den mehreren Detektoren (141, 142, 143) zum Empfangen von durch die Detektoren (141, 142, 143) erzeugten Signalen verbunden ist, um festzustellen, wenn der Drehwinkel eine Schwelle entsprechend einem Schlupf zwischen mindestens zwei Komponenten ausgewählt aus der ersten Nabe (111), der zweiten Nabe (112), dem ersten Stumpf (121) und dem zweiten Stumpf (131) überschreitet.

9. System nach Anspruch 8, wobei mindestens einer des einen oder der mehreren Detektoren ausgebildet ist, eine absolute Rotation zu erfassen.

10. System nach Anspruch 8, wobei mindestens einer des einen oder der mehreren Detektoren ausgebildet ist, eine relative Rotation zu erfassen.

11. System nach einem der Ansprüche 8 bis 10, wobei mindestens einer der Detektoren ein Wirbelstrom-Rotationsdetektor ist.

12. System nach einem der Ansprüche 8 bis 11, welches ferner eine elektronische Übertragungseinheit (160) aufweist, die mit der elektronischen Verarbeitungseinheit (150) verbunden und ausgebildet ist, an einen entfernten Rechner eines oder mehrere der Folgenden zu übertragen:
Daten, die von der elektronischen Verarbeitungseinheit (150) auf Basis der empfangenen Signale gespeichert werden,
Daten, die von der elektronischen Verarbeitungseinheit (150) auf Basis der empfangenen Signale verarbeitet werden,
Daten, die von der elektronischen Verarbeitungseinheit (150) auf Basis der empfangenen Signale verglichen werden,
Informationen, die von der elektronischen Verarbeitungseinheit (150) entsprechend gefährlichen Zuständen oder der Annäherung an gefährliche Zustände erzeugt werden.

13. System nach einem der Ansprüche 8 bis 12, welches ausgebildet ist, das Verfahren nach einem der Ansprüche 1 bis 7 auszuführen.

14. Anlage (100), die ein System nach einem der Ansprüche 8 bis 13 aufweist, wobei das System ausgebildet ist, gefährliche Zustände oder die Annäherung an gefährliche Zustände zu signalisieren.

## Revendications

1. Procédé de surveillance du fonctionnement d'un système (100) comprenant une première machine rotative (120), une seconde machine rotative (130) et un dispositif de couplage souple (110) pour transmettre la rotation d'un premier arbre (122) de la première machine rotative (120) à un second arbre (132) de la seconde machine rotative (130), dans lequel le dispositif de couplage souple (110) comprend sur un premier côté un premier moyeu (111) et sur un second côté un second moyeu (112), le procédé comprenant les étapes consistant à :
a) raccorder le premier moyeu (111) à un premier tronçon (121) d'un premier arbre (122),
b) raccorder le second moyeu (112) à un second tronçon (131) d'un second arbre (132),
c) détecter l'angle de rotation entre au moins deux composants sélectionnés entre le premier moyeu (111), le second moyeu (112), le premier tronçon (121) et le second tronçon (131), et
**caractérisé par** :
d) la surveillance du système (100) pour déterminer le moment où l'angle de rotation dépasse un seuil correspondant à un patinage entre au moins deux composants sélectionnés entre le premier moyeu (111), le second moyeu (112), le premier tronçon (121) et le second tronçon (131).

2. Procédé selon la revendication 1, dans lequel la détection de l'angle de rotation relatif à l'étape C comprend la détection de la rotation desdits au moins deux composants.

3. Procédé selon la revendication 1 ou la revendication 2, dans lequel la détection de l'angle de rotation à l'étape c) comprend la détermination de la valeur et/ou du taux de variation de la valeur de l'angle de rotation relatif entre lesdits au moins deux composants.

4. Procédé selon la revendication 3, comprenant en outre l'étape de signalisation de la valeur et/ou du taux de variation de la valeur lorsque la valeur ou le taux de variation de la valeur dépasse un niveau prédéterminé.

5. Procédé selon la revendication 3, comprenant en outre l'étape de signalisation de la valeur et/ou du taux de variation de la valeur lorsque la valeur ou le taux de variation de la valeur dépasse un niveau prédéterminé pendant une période de temps prédéterminée.

6. Procédé selon l'une quelconque des revendications 3 à 5, comprenant en outre l'étape de stockage répétée de la valeur et/ou du taux de variation de la valeur.

7. Procédé selon l'une quelconque des revendications précédentes, comprenant en outre l'étape de signalisation de conditions dangereuses ou de l'approche de conditions dangereuses.

8. Système de surveillance du fonctionnement d'un dispositif de couplage souple (110), dans lequel, sur un premier côté, un premier moyeu (111) du dispositif est raccordé à un premier tronçon (121) d'un premier arbre (122) et, sur un second côté, un second moyeu (112) du dispositif est raccordé à un second tronçon (131) d'un second arbre (132), le système comprenant :
un ou plusieurs détecteurs (141, 142 , 143) agencés pour détecter l'angle de rotation entre au moins deux composants sélectionnés entre le premier moyeu (111), le second moyeu (112), le premier tronçon (121) et le second tronçon (131), et
une unité de traitement électronique (150) connectée auxdits un ou plusieurs détecteurs (141, 142, 143) pour recevoir des signaux générés par lesdits détecteurs (141, 142, 143) pour détecter le moment où l'angle de rotation dépasse un seuil correspondant à un patinage entre au moins deux composants sélectionnés entre le premier moyeu (111), le second moyeu (112), le premier tronçon (121) et le second tronçon (131).

9. Système selon la revendication 8, dans lequel au moins l'un desdits un ou plusieurs détecteurs est agencé pour détecter une rotation absolue.

10. Système selon la revendication 8, dans lequel au moins l'un desdits un ou plusieurs détecteurs est agencé pour détecter une rotation relative.

11. Système selon l'une quelconque des revendications 8 à 10, dans lequel au moins l'un desdits détecteurs est un détecteur de rotation à courants de Foucault.

12. Système selon l'une quelconque des revendications 8 à 11, comprenant en outre une unité de transmission électronique (160) connectée à ladite unité de traitement électronique (150) et agencée pour transmettre à un ordinateur distant une ou plusieurs des informations suivantes :
des données stockées par ladite unité de traitement électronique (150) sur la base desdits signaux reçus,
des données traitées par ladite unité de traitement électronique (150) sur la base desdits signaux reçus,
des données comparées par ladite unité de traitement électronique (150) sur la base desdits signaux reçus,
des informations générées par ladite unité de traitement électronique (150) correspondant à des conditions dangereuses ou à l'approche de conditions dangereuses.

13. Système selon l'une quelconque des revendications 8 à 12, agencé pour effectuer le procédé selon l'une quelconque des revendications 1 à 7.

14. Installation (100) comprenant un système selon l'une quelconque des revendications 8 à 13, dans laquelle ledit système est agencé pour signaler des conditions dangereuses ou l'approche de conditions dangereuses.
